**Europäisches Patentamt**

**European Patent Office**

**Office européen des brevets**

(11) Veröffentlichungsnummer: **0 355 361**
**A2**

## (12) EUROPÄISCHE PATENTANMELDUNG

(21) Anmeldenummer: **89112557.7**

(22) Anmeldetag: **10.07.89**

(51) Int. Cl.⁴: **F27B 9/14 , F27B 9/02 , C04B 35/54 , F27D 3/00 , F27B 9/06 , F27B 9/04 , F27B 9/30**

(30) Priorität: **18.07.88 DE 3824323**

(43) Veröffentlichungstag der Anmeldung:
**28.02.90 Patentblatt 90/09**

(84) Benannte Vertragsstaaten:
**AT BE CH DE ES FR GB GR IT LI LU NL SE**

(71) Anmelder: **Feist, Horst J.**
**Am Mühlengraben 7**
**D-6969 Hardheim(DE)**

(72) Erfinder: **Feist, Horst J.**
**Am Mühlengraben 7**
**D-6969 Hardheim(DE)**

(74) Vertreter: **Hach, Hans Karl, Dr.**
**Tarunstrasse 23**
**D-6950 Mosbach-Waldstadt(DE)**

(54) **Verfahren zum grafitieren von Rohlingen aus Kohlenstoff zu Graphitelektroden.**

(57) Zum Grafitieren von Kohlenstoffrohlingen werden diese in einer koaxialen Reihe durch einen Vorwärmabschnitt 1, einen anschließenden Heizabschnitt 80 und einen daran anschließenden Abkühlabschnitt 81 gefördert und dabei von Argon umströmt, das zur Wärmerückgewinnung umgewälzt wird.

FIG. 1

EP 0 355 361 A2

## VERFAHREN ZUM GRAFITIEREN VON ROHLINGEN AUS KOHLENSTOFF ZU GRAPHITELEKTRODEN

Die Erfindung betrifft ein Verfahren zum Grafitieren von formstabilen Rohlingen aus Kohlenstoff zu Graphitelektroden,
bei dem gleichgroße Rohlinge koaxial einzeln aufrecht aufeinandergestellt und aufeinander abgestützt unter thermischer Isolation nach außen in axialer Richtung gefördert werden und dabei einen Heizabschnitt durchfahren, in dem sie von elektrischem Strom durchflossen werden, dabei auf Graphittemperatur aufgeheizt grafitiert und dann abgekühlt werden.

Bei einem aus DE-PS 2 311 467 bekannten Verfahren sind die Rohlinge im Heizabschnitt von Rußteilchen umgeben.

Aufgabe der Erfindung ist es, ein Verfahren der eingangs genannten Art so auszugestalten, daß der Einsatz von Rußteilchen und der dadurch bedingte Schmutz und zusätzliche Bedienungs- und Vorrichtungsaufwand vermieden wird und daß die im Heizabschnitt entstehende Abwärme möglichst weitgehend zurückgewonnen und genutzt werden kann.

Die Erfindung ist dadurch gekennzeichnet, daß die Rohlinge koaxial aufeinander abgestützt in axialer Richtung durch einen dem Heizabschnitt vorgeordneten Vorwärmabschnitt und einen dem Heizabschnitt nachgeordneten Abkühlabschnitt gefördert werden, daß in diesen Abschnitten zwischen den Rohlingen und einem isolierenden Mantel ein ringförmiger Zwischenraum ausgespart ist, daß dieser Zwischenraum nach außen im wesentlichen gasdicht abgeschlossen ist, daß dieser Zwischenraum nur Inertgas, vorzugsweise Argon, enthält und daß das Inertgas in einem geschlossenen Kreislauf aus dem Abkühlabschnitt abgezogen und dem Vorwärmabschnitt zugeführt wird, durch diesen getrieben und anschließend wieder in den Abkühlabschnitt geblasen wird.

Das Inertgas verhindert, ebenso wie die Rußteilchen, unerwünschte Reaktionen an der Oberfläche der Rohlinge während der Grafitierung; es ist aber erheblich leichter und sauberer zu handhaben als Rußteilchen und gestattet durch den geschlossenen Kreislauf die angestrebte Wärmerückgewinnung.

Die Erfindung ist ausführbar mit beliebiger Förderrichtung. Ist die Förderrichtung horizontal oder schräg, dann werden die Rohlinge an beiden Enden einer Rohlingreihe gegeneinandergepreßt, so daß sich die Rohlinge der ganzen Reihe gegeneinander verspannen und dadurch ohne zusätzliche Stütze gefördert werden können. Ist die Förderrichtung vertikal, dann ist eine solche Verspannung nicht erforderlich. Die Rohlinge können vielmehr einfach vertikal aufeinanderstehend gefördert werden. Da die Ausführungsform mit vertikaler Achsorientierung einfacher ist, ist diese Ausführungsform bevorzugt.

Es empfiehlt sich im Interesse einer Reduktion der Bauhöhe einer Vorrichtung zur Ausübung des erfinderischen Verfahrens den Durchlauf der Rohlinge in zwei Abschnitte zu unterteilen, die vorzugsweise gleich lang und nebeneinander angeordnet sind. Eine dementsprechende Weiterbildung der Erfindung ist dadurch gekennzeichnet, daß die Rohlinge im Vorwärmabschnitt in einer ersten Richtung - aufwärts oder abwärts, vorzugsweise aufwärts - und in den beiden anderen Abschnitten durchgehend koaxial aufeinanderstehend in Gegenrichtung, also vorzugsweise abwärts, bewegt werden und daß die Rohlinge achsparallel aber quer zu ihrer Achsrichtung horizontal einzeln nacheinander vom förderabwärtigen Ende des Vorwärmabschnittes zum förderaufwärtigen Ende des Heizabschnittes gefördert werden.

Die beiden Abschnitte werden deshalb zweckmäßig in Gegenrichtung betrieben, weil dann die Übergabe zwischen den beiden Abschnitten und die Abnahme und Aufgabe der Rohlinge jeweils in einer Ebene stattfinden kann. Dabei empfiehlt es sich, die Förderrichtung im Heizabschnitt und im nachgeordneten Abkühlabschnitt von oben nach unten vorzunehmen, weil dann der Heizabschnitt im oberen Teil der Vorrichtung angeordnet ist, in dem das heiße Inertgas, das durch Konvektion nach oben steigt, leicht gestaut werden kann, wie dies für eine günstige Wärmeausnutzung wünschenswert ist.

Möglicherweise entstehen bei horizontalen Übergabe Wartezeiten. Damit in diesen Wartezeiten keine unerwünschte Abkühlung stattfindet, empfiehlt es sich, daß die Rohlinge bei der horizontalen Übergabe vom Vorwärmabschnitt zum Heizabschnitt nach außen thermisch isoliert und von Inertgas des Inertgaskreislaufs umspült werden.

Der Kreislauf des Inertgases ist abgeschlossen, einerseits um unnötige Wärmeverluste zu vermeiden und andererseits um auch Verlust des Inertgases zu vermeiden, das, wenn es sich wie vorzugsweise der Fall um Argon handelt, kostspielig ist. Es sind auch andere Inertgase geeignet, die zum Teil auch kostspielig sind und deren unnötiger Austritt in die Atmosphäre unter dem Gesichtspunkt des Umweltschutzes vermieden werden soll.

Um diesen geschlossenen Kreislauf zu ermöglichen und auch um einen unnötigen Wärmeabfluß beim Zuführen und Abführen der Rohlinge zu vermeiden, empfiehlt es sich, daß die Rohlinge einzeln am förderaufwärtigen Ende des Vorwärmabschnittes unter Gasabschluß achsparallel ausgerichtet, durch hori-

2

zonta len Versatz an die Reihe der Rohlinge eingeschleust angeschlossen werden und entsprechend am förderabwärtigen Ende des Abkühlabschnittes abgenommen und ausgeschleust werden.

Im Heizabschnitt können die Rohlinge erheblich schneller gefördert werden als in den Vorwärmabschnitten, weil in den Vorwärmabschnitten viel Zeit benötigt wird, um die Rohlinge unter möglichst optimaler Ausnutzung des Wärmeinhalts des Inertgases aufzuheizen. Aus diesem Grunde empfiehlt es sich, daß ein einziger Heizabschnitt mit nachgeordnetem Abkühlabschnitt aus mehreren, vorzugsweise drei zueinander parallel betriebenen Vorwärmabschnitten mit Rohlingen beschickt wird.

Im Heizabschnitt sollen die Rohlinge, damit sie möglichst schnell die Grafitiertemperatur erreichen, möglichst wenig durch das sie umspülende Inertgas abgekühlt werden. Aus diesem Grunde wird vorzugsweise das die Rohlinge im Heizabschnitt umgebende Inertgas erheblich weniger bewegt als das Inertgas in den anderen Abschnitten, und zwar durch mindestens teilweies Absperren des Gasabflusses im Heizabschnitt nach oben.

Für den Abkühlabschnitt ist ein ganz bestimmter Temperaturverlauf der Abkühltemperatur gegenüber der Abkühlzeit optimal für die angestrebte Grafitierung. Das hängt im einzelnen von vielen Umständen ab und wird im allgemeinen ausprobiert.

Aufgabe einer Weiterbildung der Erfindung ist es deshalb, diesen Temperaturverlauf möglichst detailliert einstellbar zu machen, und das geschieht dadurch, daß das Inertgas an mehreren Stellen auf die Länge des Abkühlabschnittes verteilt dosiert in den Abkühlabschnitt eingeblasen und/oder aus diesem abgezogen wird.

Diverse Funktionsteile, wie Elektroden, Förderelemente, Schleusenelemente und dergleichen einer zur Ausübung des Verfahrens vorgesehenen Vorrichtung, müssen laufend gekühlt werden. Zu diesem Zweck ist vorzugsweise ein zweiter mit Kühlmittel durchflossener Kühlkreislauf vorgesehen.

Dem Kühlmittel dieses zweiten Kühlkreislaufs wird vorzugsweise, um eine hinreichend intensive Kühlung zu erzielen, stromaufwärts der zu kühlenden Teile von außen Kälte zugeführt beziehungsweise durch einen entsprechenden Wärmetauscher nach außen Wärme entzogen.

Eine besonders einfache Ausgestaltung bei gleichzeitiger optimaler Nutzung der Abwärme ist erzielbar, wenn in einem solchen Fall der zweite Kühlkreislauf mit Inertgas betrieben wird, das stromabwärts der zu kühlenden Teile mit dem Inertgas des ersten Kühlkreislaufs vermischt und stromaufwärts der Zufuhr äußerer Kälte von dem ersten Kühlkreislauf abgezweigt wird. Dabei empfiehlt es sich, für den zweiten Kühlkreislauf stromaufwärts der zu kühlenden Teile einen höheren Prozeßdruck vorzusehen, um die Kühlungswirkung zu intensivieren.

Die besonders wichtige Kühlung der zur Zufuhr des Heizstroms im Heizabschnitt dienenden Elektroden wird einfach dadurch möglich, daß die Elektroden mit von außen direkt zugeführtem Inertgas des zweiten Kühlkreislaufs umspült werden, das dann anschließend in den Zwischenraum des Heizabschnittes strömt, und daß der dadurch im Heizabschnitt entstehende Inertgasüberschuß am unteren und am oberen Ende des Heizabschnittes dosiert abgezogen wird, und zwar vorzugsweise derart, daß von der zuunterst angeordneten Elektrode der Überschuß nach unten strömt und von den darüber angeordneten Elektroden nach oben strömt. Man spart sich auf diese Weise gesonderte von den Elektroden ausgehende Ableitungen für das Kühlmittel des zweiten Kühlkreislaufs.

Die Temperatur, mit der die Rohlinge vom Vorwärmabschnitt dem Heizabschnitt zugeführt werden, soll unter Umständen einen gewissen Grenzwert nicht überschreiten. Damit das nicht geschieht, wird abhängig von dieser Übergabetemperatur Inertgas am förderaufwärtigen Ende des Vorwärmabschnittes dosiert abgezogen und am förderabwärtigen Ende dem Vorwärmabschnitt wieder zugeführt.

Normalerweise fallen die Rohlinge mit einigermaßen planen Stirnflächen an, aber da sind Unebenheiten und Vorsprünge nie ganz zu vermeiden. Solche Unebenheiten und Vorsprünge machen aber unter Umständen dem koaxialen Stapel der Rohlinge instabil. Dem trägt eine besondere Ausgestaltung der Erfindung Rechnung, die dadurch gekennzeichnet ist, daß die Rohlinge vor dem Aufeinanderstellen beidseitig stirnseitig durch Abtragen, vorzugsweise Abdrehen, senkrecht zu ihrer Achse planiert werden.

Die Erfindung wird nun anhand der beigefügten Zeichnung näher erläutert.

In der Zeichnung zeigt:

Figur 1 ein Ausführungsbeispiel einer Vorrichtung zur Durchführung des Verfahrens nach der Erfindung im Schnitt,

Figur 2 einen Teilschnitt aus Figur 1,

Figur 3 einen Ausschnitt aus Figur 1 vergrößert und mit weiteren Details,

Figur 4 den Schnitt IV aus Figur 3 und

Figur 5 ein Betriebsdiagramm zu Figur 1 bis 4.

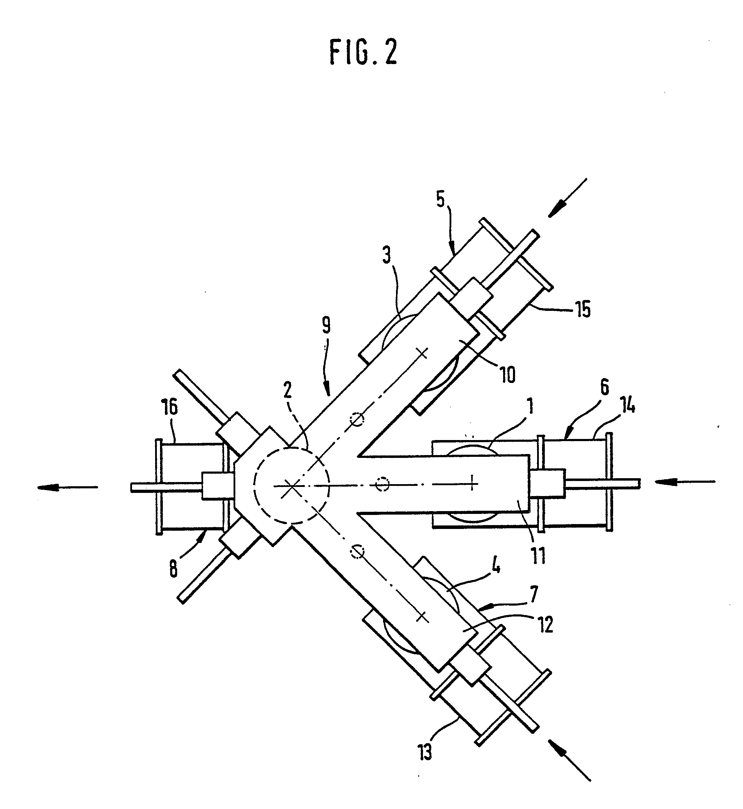

In der Zeichnung sind mit 1 bis 4 insgesamt vier Graphitrohre bezeichnet, die kreisrunden Innen- und Außenquerschnitt haben, hoch hitzebeständig, gasdicht und thermisch isolierend sind. Die Rohre sind achsparallel vertikal nebeneinander angeordnet und sämtlichst gleich hoch. Die Rohre 1 bis 4 stehen auf Schleusenvorrichtungen 5 bis 8. Die nur in Figur 2 sichtbaren Schleusenvorrichtungen 5 und 7 sind genauso ausgebildet wie die Schleusenvorrichtung 6. Am oberen Ende der Rohre 1 bis 4 ist eine horizontale Fördervorrichtung 9 vorgesehen, die drei Förderzweige 10, 11, 12 aufweist. Die Förderzweige führen vom oberen Ende der Rohre 1, 3, 4 gemeinsam zu dem oberen Ende des Rohrs 2 mit einer Förderrichtung, die den in Figur 2 eingezeichneten Pfeilen entspricht.

Die Schleusenvorrichtungen 5 bis 8 und die horizontale Fördervorrichtung 9 sind je in einem geschlossenen Gehäuse 13 bis 17 untergebracht. Diese Gehäuse sind hochtemperaturbeständig, thermisch isolierend und gasdicht ausgeführt. Die Schleusenvorrichtungen 5 bis 8 sind in je zwei Kammern, zum Beispiel die Kammern 18, 19 beziehungsweise 20, 21 der Schleusenvorrichtung 6 und 8 unterteilt. Die jeweils inneren Kammern 18 und 21 kommunizieren mit dem Innenraum des zugehörigen Rohrs 1 bis 4 und der Innenraum des Gehäuses 17 kommuniziert mit den Innenräumen aller vier Rohre 1 bis 4.

Die Schleusenvorrichtung 6 weist zwei bewegliche Schleusentore 22, 23, zwei Förderer 24, 25, einen Hubstempel 26 und ein Spannorgan 27 auf. Diese Teile sind hydraulisch betätigbar, die entsprechenden Betätigungsorgane sind zum Teil nur angedeutet, zum Teil nicht eingezeichnet.

Die Förderer 24, 25 sind zum Transport von aufrecht stehenden, kreiszylindrischen, formstabilen Rohlingen 30 bis 33 für Graphitelektroden geeignet, die jeweils mehrere Meter lang sind.

Der Innenraum des Rohres 1 ist mit einer spiraligen Schikane 35 aus Graphit ausgekleidet. Innerhalb der Schikane bleibt noch Platz mit Spiel für eine Reihe 36 von koaxial aufeinandergestellten, gleichgroßen, kreiszylindrischen Rohlingen.

Diese Rohlinge sind an beiden Stirnseiten 37, 38 senkrecht zu ihrer Achse plangedreht, so daß sie sich präzise koaxial stapeln lassen. Der Stapel wird von unten eingeführt und schrittweise, mit jedem Schritt um eine Rohlinglänge nach oben gefördert. Dazu werden über die Schleusenkammern von außen neue Rohlinge nachgefördert und unten an die gestapelte Reihe 36 angeschlossen. Oben gelangt die jeweils oberste Elektrode in den Horizontalförderer 9. Der Horizontalförderer ist mit einem Förderstempel 40, einem Justierer 41, einem Ausgleicher 42 und einem Greifer 43 ausgestattet. Diese Elemente sind hydraulisch betätigbar. Die dafür vorgesehenen hydraulischen Antriebe sind nicht mit eingezeichnet.

Der jeweils oberste Rohling wird von dem Förderstempel 40 erfaßt und horizontal verschoben in eine Stellung koaxial zur Achse des Rohres 2. In dieser Stellung wird er von dem Justierer 41 axial ausgerichtet und auf eine Rohlingreihe 44, die gebildet ist aus koaxial aufeinandergestellten Rohlingen, oben draufgesetzt.

Am oberen Ende der beiden Rohre 1 und 2 befindet sich jeweils noch eine hydraulisch betätigbare Klammer 45, 46 zum Festhalten des jeweils obersten Rohlings 47, 29.

Die Reihe 44 findet in dem Innenraum des Rohres 2 mit ringförmigem Zwischenraum 48 Platz. Entsprechend bleibt auch in dem Rohr 1 ein ringförmiger Zwischenraum 49 stehen, der allerdings, bedingt durch die Schikane 35 spiralig geformt ist.

Die Schleusenvorrichtung 8 ist entsprechend ausgebildet wie die Schleusenvorrichtung 6 und gestattet es, die Reihe 44 schrittweise um jeweils die Länge eines Rohlings abzusenken und den jeweils untersten Rohling horizontal zur Seite zu schieben und dann über die Kammer 20 in Pfeilrichtung auszuschleusen.

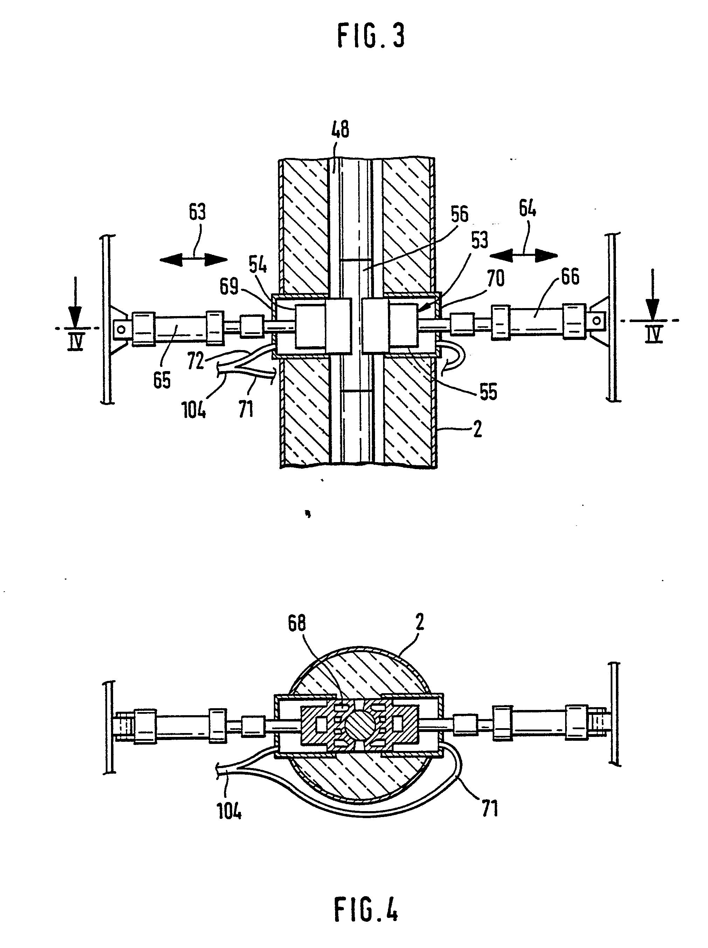

Die Rohre 3 und 4 sind mit den zugehörigen Schleusenvorrichtungen 5 und 7 entsprechend ausgebildet wie das Rohr 1 mit der Schleusenvorrichtung 6 und werden auch entsprechend betrieben. An das obere Ende des Rohres 2 gelangen Rohlinge entweder alternierend von den drei Rohren 1, 3 und 4 oder zu mehreren zunächst vom Rohr 1, dann zu mehreren vom Rohr 3 und dann zu mehreren vom Rohr 4, jedenfalls insgesamt einzeln hintereinander. Im oberen Abschnitt des Rohres 2 sind Elektrodenanordnungen 51, 52, 53 vorgesehen. Die Elektrodenanordnungen sind unter sich gleich ausgebildet, wie dies nun im einzelnen für die Elektrodenanordnung 53 anhand der Figuren 3 und 4 näher beschrieben wird.

Jede Elektrodenanordnung besteht aus zwei diametral einander gegenüber angeordneten Graphitelektroden 54, 55, die, wie aus Figur 4 ersichtlich, schalenförmig den dazwischen angeordneten Rohling formschlüssig umgeben. Die Elektroden sind an in Figur 3 und 4 nicht dargestellte Stromzuleitungen 60 bis 62 angeschlossen. Sie sind hydraulisch betätigbar in Richtung der Pfeile 63, 64 mittels der hydraulischen Zylinder 65, 66. Wenn die Rohlingreihe 44 nach unten gefördert wird, werden die Elektroden von dem betreffenden Rohling abgesetzt und bei Stillstand der Rohlinge 44 angesetzt und mit Heizstrom beaufschlagt.

Die Elektroden weisen koaxiale Durchbrüche 68 auf, die mit dem Zwischenraum 48 kommunizieren. Die Elektroden sind in Kammern 69, 70 untergebracht, in die Kühlmittelzuleitungen 71, 72 münden. Das dort zugeführte flüssige Kühlmittel durchströmt die Elektroden in nicht eingezeichneten Kanälen und gelangt dann in den Zwischenraum 48.

Bei Betrieb werden die Rohlinge in einer koaxialen Reihe 56 im Rohr 1 und in entsprechend koaxialen

4

Reihen in den Rohren 3 und 4 vertikal schrittweise nach oben gefördert, von da einzeln oben an die Reihe 44 angesetzt, die schrittweise nach unten gefördert wird, von wo die Rohlinge horizontal einzeln ausgeschleust werden. Auf dem Wege in den Rohren 1, 3 und 4 nach oben findet Vorwärmung statt. Der obere Teil des Rohres 2 ist der Heizabschnitt, der durch den Doppelpfeil 80 gekennzeichnet ist, und der untere Teil, der durch den Doppelpfeil 81 gekennzeichnet ist, ist der Abkühlabschnitt.

Die Innenräume der Gehäuse 13 bis 17 und die ringförmigen Zwischenräume 48, 49, die miteinander kommunizieren, sind mit reinem Argon gefüllt. Dieses Argon wird über ein noch zu beschreibendes Leitungssystem in einem geschlossenen Kreislauf geströmt. Dabei strömt das heiße Argon aus dem Zwischenraum 48 in den Zwischenraum 49 beziehungsweise die Innenräume der anderen Rohre. Dadurch werden die Rohlinge in den Rohren 1, 3 und 4 vorgewärmt.

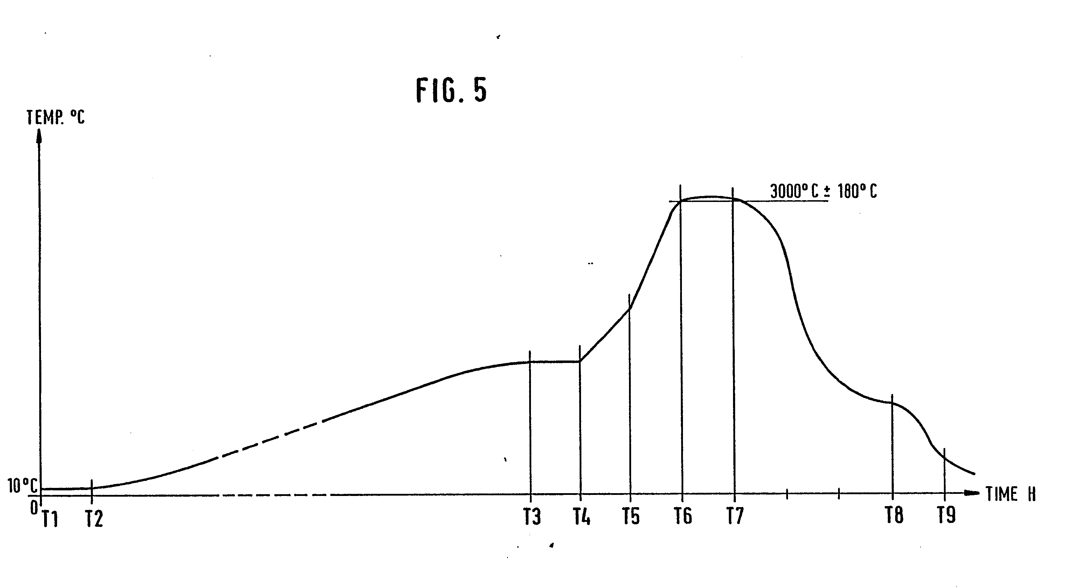

Im Heizabschnitt werden die Rohlinge durch die zugeführte elektrische Energie aufgeheizt und im Abkühlabschnitt gemäß Doppelpfeil 81 kühlen sie, unterstützt durch die Umspülung des Argon, ab. Es ergibt sich dabei der aus Figur 5 ersichtliche Temperaturverlauf.

T1 entspricht der Aufgabe in die Schleusenvorrichtung 6, 7 beziehungsweise 8, T2 dem Einführen des Rohlings am unteren Ende in das Rohr 1 beziehungsweise 3 oder 4, T3 dem Einführen des Rohlings in den Horizontalförderer 9, T4 dem Einführen des Rohlings am oberen Ende in das Rohr 2, T5 der Höhenlage der Elektrodenanordnung 51, T6 der Höhenlage der Elektrodenanordnung 52, T7 der Höhenlage der Elektrodenanordnung 53, T8 dem Eintritt in die Schleusenvorrichtung 8 und T9 dem Austritt aus der Schleusenvorrichtung 8.

In der Zeitspanne von T2 bis T4 wird der Rohling vorgewärmt. Die Zeitspanne von T2 bis T4 ist dreimal so lang wie die Zeitspanne von T4 bis T8. Das ist im Diagramm durch die für die Zeitspanne T2 bis T3 gezeichneten Unterbrechungen zum Ausdruck gebracht. Von T4 bis T7 wird der Rohling aufgeheizt und hat bei T6 bis T7 seine Grafitier-Temperatur von 3000 °C (Grad Celsius) ±180°C. Anschließend erfolgt von T7 bis T8 die erste Abkühlungsphase und eine kleine Abkühlungsphase schließt sich noch zwischen T8 und T9 an. Der Rest der Abkühlung erfolgt im Freien.

Die Zeitspannen haben folgende Dauer:
T1 bis T2 = 10 Stunden (5 bis 30 Stunden)
T2 bis T3 = 80 Stunden (40 bis 240 Stunden)
T3 bis T4 = 10 Stunden (5 bis 30 Stunden)
T4 bis T5 = 10 Stunden (5 bis 30 Stunden)
T5 bis T6 = 10 Stunden (5 bis 30 Stunden)
T6 bis T7 = 10 Stunden (5 bis 30 Stunden)
T7 bis T8 = 30 Stunden (10 bis 90 Stunden)
T8 bis T9 = 10 Stunden (5 bis 30 Stunden).

Die Temperatur der Elektroden beträgt bei

| T1 | 20 °C (10 bis 60 °C) |
|----|----------------------|
| T2 | 20 °C (10 bis 60 °C) |
| T3 | 1500 °C (1000 bis 2000 °C) |
| T4 | 1500 °C (1000 bis 2000 °C) |
| T5 | 2000 °C (1500 bis 2500 °C) |
| T6 | 3000 °C (2820 bis 3180 °C) |
| T7 | 3000 °C (2820 bis 3180 °C) |
| T8 | 1000 °C (800 bis 1200 °C) |
| T9 | 500 °C (300 bis 600 °C) |

Die Zahlenangaben zu den Zeiten und Temperaturen in Klammern ( ) sind bevorzugte Spannen, innerhalb derer die jeweils vorangestellten Zahlenangaben für Dauer und Temperatur, nach denen das Beispiel tatsächlich ausgeführt ist, variierbar sind.

Das Argon gelangt aus einem vorgesehenen Argonspeicher 85 über ein Leitungssystem 86 und ein Gebläse 87 an verschiedenen Stellen in das System. Auf die Höhe des Abkühlabschnittes gemäß Doppelpfeil 81 sind fünf Zuleitungen 88 verteilt vorgesehen, die in den Zwischenraum 48 münden und durch regelbare Ventile 89 einzeln mehr oder weniger stark absperr bar sind. Diese Ventile können von Hand oder mittels je eines Reglers 90 verstellt. Dem Regler 90 ist ein Thermofühler 91 zugeordnet, der an eine von fünf Abflußleitungen 92 angesetzt ist, die vom Zwischenraum 48 ausgehen und ebenfalls auf die Höhe des Abkühlabschnittes verteilt angeordnet sind.

Das dort abströmende Argon kann wahlweise über die Leitung 93 am oberen Ende in den ringförmigen Zwischenraum 49 oder über die Leitung 94 und das Gebläse 87 am unteren Ende in den Zwischenraum 49 eingespeist werden. Die entsprechenden Ströme werden durch Ventile 95, 96 gesteuert.

Vom oberen Ende des Rohres 2 geht eine Leitung 98 aus, die in das obere Ende des Zwischenraums 49 mündet und ebenfalls mit einem verstellbaren Ventil 99 ausgestattet ist. Vom unteren Ende des Rohres 1 geht eine Leitung aus, die in die Leitung 86 mündet.

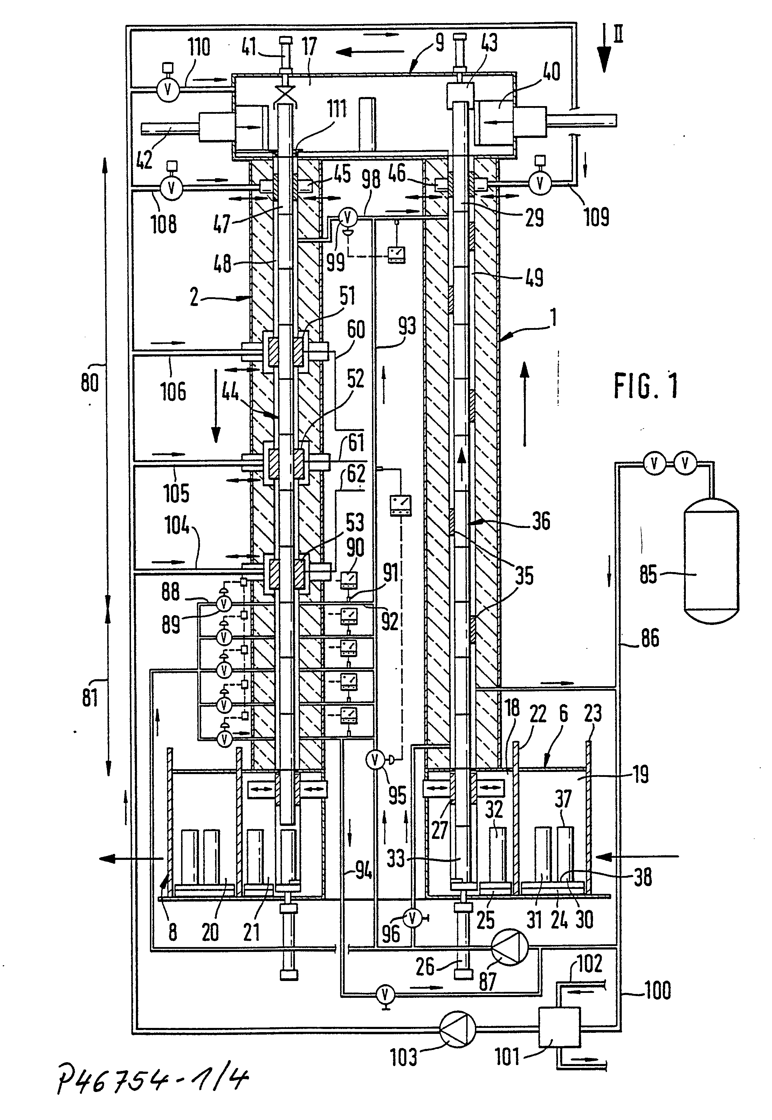

Entsprechend wie für das Rohr 1 in Figur 1 gezeichnet sind auch die Rohre 3 und 4 an den Argon-Kreislauf angeschlossen. Der Argon-Kreislauf ist regulierbar, insbesondere ist die Strömung im Abkühlbereich gemäß Doppelpfeil 81 sehr detailliert regulierbar durch die diversen Ventile entsprechend dem Ventil 89, so daß zwischen den Zeiten T7 und T8 der Temperaturverlauf sehr präzise detailliert gesteuert werden kann.

Die Leitung 93, 94 kann als Bypass zu dem Zwischenraum 49 eingesetzt werden, um kaltes Argon von oben in den Zwischenraum einzuströmen, wenn dort die Temperatur der Rohlinge zu hoch zu werden droht.

An den beschriebenen Argon-Kreislauf ist ein zweiter Argon-Kreislauf angeschlossen, der dazu dient, diverse Funktions teile der Vorrichtung laufend zu kühlen. Der zweite Kreislauf beginnt mit der Leitung 100, die zunächst einen Wärmetauscher 101 durchsetzt, der von einer äußeren, von Kühlmittel durchströmten Kühlmittelleitung 102 durchsetzt ist, so daß im Anschluß daran das Argon gekühlt ist.

Das gekühlte Argon durchströmt das Gebläse 103, das einen erheblich höheren Ausgangsdruck aufweist als das Gebläse 87. Die Rohrleitungen dieses zweiten Kühlkreislaufs sind stärker gezeichnet und münden mit Abzweigen 104, 105, 106 in den Elektrodenanordnungen 51, 52, 53, mit Abzweigen 108, 109 in den Klammern 45, 46 und mit einem Abzweig 110 die horizontale Fördervorrichtung 9 zum Kühlen des Förderstempels 40, des Justierers 41, des Ausgleichers 42 und des Greifers 43. Das so diesen Funktionsteilen zugeführte kühlende Argon strömt dann anschließend in den Zwischenraum 48 beziehungsweise 49 beziehungsweise in das Innere der horizontalen Fördervorrichtung 9 und vereinigt sich dadurch mit dem Argon des ersten Kreislaufs.

Im Heizabschnitt gemäß Doppelpfeil 80 wird die Strömungsbewegung des Argon möglichst niedrig gehalten, um dort möglichst wenig Wärme abzuführen. Das wird erreicht, indem am oberen Ende des Rohres 2 der Zwischenraum 48 eine labyrinthartige, ringförmige Abdichtung 111 aufweist, so daß das heiße Argon im wesentlichen aus dem oberen Teil des Rohres 2 nicht in großem Umfang in den Horizontalförderer 9 abströmen kann.

Durch die Zuführung von kühlem Argon über die Abzweige, 104, 105, 106 und 108 entsteht jedoch ein Argon-Überschuß im Heizabschnitt, der über die Leitung 98 beziehungsweise eine der Leitungen 92 abgeleitet werden kann. Das wird so dosiert, daß aus dem Bereich der zuunterst angeordneten Elektrodenanordnung 53 der Überschuß nach unten strömt und aus dem Bereich darüber der Überschuß nach oben abströmt über die Leitung 98.

Die Anordnung kann so betrieben werden, daß das Argon im Zwischenraum 49 von oben nach unten oder von unten nach oben strömt. Es wird dabei zu einer spiralförmigen Strömung gezwungen durch die Schikane 35.

Der Betrieb erfolgt nach Möglichkeit so, daß auch beim Einschleusen und Ausschleusen der Rohlinge möglichst kein Argon verlorengeht. Geringe unvermeidliche Verluste werden aus dem Argonspeicher 85 ersetzt.


**Ansprüche**


1. Verfahren zum Grafitieren von formstabilen, Rohlingen aus Kohlenstoff zu Graphitelektroden, bei dem gleichgroße Rohlinge koaxial einzeln aufrecht aufeinandergestellt und aufeinander abgestützt unter thermischer Isolation nach außen in axialer Richtung gefördert werden und dabei einen Heizabschnitt durchfahren, in dem sie von elektrischem Strom durchflossen werden, dabei auf Graphittemperatur aufgeheizt grafitiert und dann abgekühlt werden, dadurch gekennzeichnet, daß die Rohlinge koaxial aufeinander abgestützt in axialer Richtung durch einen dem Heizabschnitt vorgeordneten Vorwärmabschnitt und einen dem Heizabschnitt nachgeordneten Abkühlabschnitt gefördert werden, daß in diesen Abschnitten zwischen den Rohlingen und einem isolierenden Mantel ein ringförmiger Zwischenraum ausgespart ist, daß dieser Zwischenraum nach außen im wesentlichen gasdicht abgeschlossen ist, daß dieser Zwischenraum nur Inertgas, vorzugsweise Argon, enthält und

6

daß das Inertgas in einem geschlossenen Kreislauf aus dem Abkühlabschnitt abgezogen und dem Vorwärmabschnitt zugeführt wird, durch diesen getrieben und anschließend wieder in den Abkühlabschnitt geblasen wird.

2. Verfahren nach Anspruch 1, dadurch gekennzeichnet,
daß die Rohlinge vertikal aufeinanderstehend gefördert werden.

3. Verfahren nach Anspruch 2, dadurch gekennzeichnet,
daß die Rohlinge im Vorwärmabschnitt in einer ersten Richtung - aufwärts oder abwärts, vorzugsweise aufwärts -und in den beiden anderen Abschnitten durchgehend koaxial aufeinanderstehend in Gegenrichtung, also vorzugsweise abwärts, bewegt werden und
daß die Rohlinge achsparallel aber quer zu ihrer Achsrichtung horizontal einzeln nacheinander vom förderabwärtigen Ende des Vorwärmabschnittes zum förderaufwärtigen Ende des Heizabschnittes gefördert werden.

4. Verfahren nach Anspruch 3, dadurch gekennzeichnet,
daß die Rohlinge bei der horizontalen Übergabe vom Vorwärmabschnitt zum Heizabschnitt nach außen thermisch isoliert und von Inertgas des Inertgaskreislaufs umspült werden.

5. Verfahren nach einem der vorhergehenden Ansprüche, dadurch gekennzeichnet,
daß die Rohlinge einzeln am förderaufwärtigen Ende des Vorwärmabschnittes unter Gasabschlus achsparallel ausgerichtet, durch horizontalen Versatz an die Reihe der Rohlinge eingeschleust angeschlossen werden und entsprechend am förderabwärtigen Ende des Abkühlabschnittes abgenommen und ausgeschleust werden.

6. Verfahren nach einem der vorhergehenden Ansprüche, dadurch gekennzeichnet,
daß ein einziger Heizabschnitt mit nachgeordnetem Abkühlabschnitt aus mehreren, vorzugsweise drei zueinander parallel betriebenen Vorwärmabschnitten mit Rohlingen beschickt wird.

7. Verfahren nach einem der vorhergehenden Ansprüche, dadurch gekennzeichnet,
daß das die Rohlinge im Heizabschnitt umgebende Inertgas erheblich weniger bewegt wird als das Inertgas in den anderen Abschnitten, und zwar durch mindestens teilweises Absperren des Gasabflusses im Heizabschnitt nach oben.

8. Verfahren nach einem der vorhergehenden Ansprüche, dadurch gekennzeichnet,
daß das Inertgas an mehreren Stellen auf die Länge des Abkühlabschnittes verteilt dosiert in den Abkühlabschnitt eingeblasen und/oder aus diesem abgezogen wird.

9. Verfahren nach einem der vorhergehenden Ansprüche, dadurch gekennzeichnet,
daß für zu kühlende Funktionsteile, wie Elektroden, Förderelemente, Schleusenelemente und dergleichen, ein zweiter mit Kühlmittel durchflossener Kühlkreislauf vorgesehen ist,
daß dem Kühlmittel dieses zweiten Kühlkreislaufs stromaufwärts der zu kühlenden Teile von außen Kälte zugeführt wird und
daß der zweite Kühlkreislauf mit Inertgas betrieben wird, das stromabwärts der zu kühlenden Teile mit dem Inertgas des ersten Kühlkreislaufs vermischt und stromaufwärts der Zufuhr äußerer Kälte von dem ersten Kühlkreislauf abgezweigt wird.

10. Verfahren nach Anspruch 9, dadurch gekennzeichnet,
daß die Elektroden mit von außen direkt zugeführtem Inertgas des zweiten Kühlkreislaufs umspült werden, das dann anschließend in den Zwischenraum des Heizabschnittes strömt, und
daß der dadurch im Heizabschnitt entstehende Inertgas Überschuß am unteren und am oberen Ende des Heizabschnittes dosiert abgezogen wird, und zwar vorzugsweise derart,
daß von der zuunterst angeordneten Elektrode der Überschuß nach unten strömt und von den darüber angeordneten Elektroden nach oben strömt.

11. Verfahren nach einem der vorhergehenden Ansprüche, dadurch gekennzeichnet,
daß Inertgas am förderaufwärtigen Ende des Vorwärmabschnitts dosiert abgezogen wird und am förderabwärtigen Ende dem Vorwärmabschnitt wieder zugeführt wird.

12. Verfahren nach einem der vorhergehenden Ansprüche, dadurch gekennzeichnet,
daß die Rohlinge vor dem Aufeinanderstellen beidseitig stirnseitig durch Abtragen, vorzugsweise Abdrehen, senkrecht zu ihrer Achse planiert werden.

FIG. 1

P46754-1/4

# FIG. 2

P46754 - 2/4

# FIG.3

# FIG.4

P46754-3/4

FIG. 5

TEMP. °C

3000° C ± 180° C

10°C

0   T1   T2                                    T3   T4   T5   T6   T7                    T8   T9   TIME  H

EP 0 355 361 A2